# EUROPEAN PATENT SPECIFICATION

(11) **EP 2 136 428 B1**
(45) Date of publication and mention of the grant of the patent: **15.03.2017**
(21) Application number: 08722929.0
(22) Date of filing: 27.03.2008
(51) Int. Cl.: H01M 8/243, H01M 8/247, H01M 8/248, H01M 8/124

(54) **SOLID STATE OXIDE FUEL CELL**
FESTOXID-BRENNSTOFFZELLE
PILE À COMBUSTIBLE D'OXYDE SOLIDE

(30) Priority: 30.03.2007 JP 2007095208
(43) Date of publication of application: 23.12.2009
(73) Proprietor: TOTO LTD., Kitakyushu-shi Fukuoka 802-8601 (JP)
(72) Inventor: FUJINAGA, Kosaku, Kitakyushu-shi Fukuoka 802-8601 (JP)
(74) Representative: Witte, Weller & Partner Patentanwälte mbB
(86) International application number: PCT/JP2008/056645
(87) International publication number: WO 2008/123576

(56) References cited:
- WO-A1-2006/046287
- JP-A- 06 203 857
- JP-A- 08 162 146
- JP-A- 10 247 509
- JP-A- 2000 058 101
- JP-A- 2000 058 101
- JP-A- 2002 056 881
- JP-A- 2004 247 131
- JP-A- 2004 247 131
- JP-A- 2007 103 237
- JP-A- 2008 010 335

## Description

### TECHNICAL FIELD

The present invention relates to a solid oxide fuel cell device, and in particular to a structure of a solid oxide fuel cell device in which a plurality of fuel cells are electrically coupled to each other.

### BACKGROUND ART

A solid oxide fuel cell device is expected as a fuel cell having a high working temperature (700 to 1000 °C) and a high efficiency. Usually, solid oxide fuel cells are electrically coupled in series and/or in parallel to form a stack, and are used in a form of a module structure in which fuel cell stacks are electrically coupled in series and/or in parallel. Hereinafter, a unit of one fuel cell will be described as "a fuel cell", and a member which electrically couples the fuel cells will be described as "a conductive member".

In a fuel cell stack, a plurality of fuel cells are disposed and fixed to a conductive holding member having a U-shaped section in an electrically parallel unit, and fuel electrodes of adjacent fuel cells are electrically coupled in parallel via a nickel felt. A nickel felt is also provided on an interconnector of each of the fuel cells. Units of parallel fuel cells that are arranged on the respective holding member are stacked, whereby interconnectors and corresponding fuel electrodes of fuel cells disposed thereabove are electrically coupled in series respectively (see e.g., document JP2002056881 A; and pages 4-6 and Figures 2-4 of JP 3281821 B2).

However, such a fuel cell stack structure requires a burning process in which a heat treatment is carried out at a predetermined temperature while setting an air electrode side into an oxidizing atmosphere and a fuel electrode side into a reducing atmosphere. Thus, there has been a problem in that an industrial mass production is difficult.

Furthermore, the fuel cell and the holding member are coupled to each other only via the nickel felts. Thus, there has been another problem in that the fuel cell and the nickel felt are likely to be separated from each other due to a shock during an assembly or a transportation of a fuel cell module.

In a fuel cell module, a heat insulating material, an inner fuel cell container, another heat insulating material and an outer fuel cell container are arranged in this order around a plurality of fuel cell stacks, thereby keeping a current collection from fuel cells and conductive members of the plurality of fuel cell stacks while permitting a variation in a thermal stress which may be caused by a temperature distribution of the respective fuel cells before and after a power generation (see e.g., pages 5 and 6 and Figures 1 and 2 of JP 1-248479 A).

However, in such a fuel cell module structure, before and after the power generation, a thermal distortion is generated in the inner fuel cell container due to a difference in a temperature between a portion near the fuel cell stack and a portion near the inner fuel cell container because of the heat insulating material surrounding the fuel cell stacks, so that a gap is likely to be created between the inner fuel cell container and the heat insulating material near the inner fuel cell container. Moreover, a fuel gas having a higher density is supplied to a portion near the inner fuel cell container than a portion of the heat insulating material near the fuel cell stacks. Thus, there has been a problem in that an amount of the fuel gas which does not contribute to the power generation of the fuel cell device is increased, resulting in a deterioration in the power generating performance of the fuel cell devie.

Furthermore, fuel cells sometimes have a warpage of 2 mm per meter, and in such cases, a coupling failure between the fuel cell and the conductive member is likely to be generated due to an action of a thermal stress caused in each of the fuel cells in accordance with a temperature distribution of the fuel cell devie at the time of power generation. In order to prevent such a coupling failure, i.e., in order to maintain a stable coupling of the fuel cell and the conductive member, there has been a problem that a structure for pressing the fuel cell stacks at least in an electrically serial direction needs to be additionally provided, which makes the module structure complex.

### DISCLOSURE OF THE INVENTION

It is therefore an object of the present invention to provide a fuel cell device in which a fuel cell stack is suitable for an industrial mass production by simplifying a manufacturing process and in which a fuel gas is effectively supplied to a fuel cell to improve power generating performance of the duel cell device.

The above object is achieved according to the present invention by providing a solid oxide fuel cell device according to present claim 1 comprising a fuel cell stack including a plurality of cylindrical fuel cells, and a conductive member for electrically connecting the fuel cells, and a holding member surrounding the fuel cell stack, wherein the holding member includes a pressing portion for pressing the fuel cell stack in an electrically serial direction, and a fixing unit for fixing the holding member.

According to the present invention, the holding member comprises a fuel electrode side holding member which is disposed at a fuel electrode side end of the fuel cell stack, an air electrode holding member which is disposed at an air electrode side end, a side surface holding member coupling the fuel electrode side holding member and the air electrode holding member, and an insulating portion which electrically insulates the fuel electrode side holding member and/or the air electrode side holding member from the side surface holding member.

In another preferred embodiment of the present invention, the fuel electrode side holding member or the air electrode side holding member is formed in a one piece structure with the side surface holding member.

In still another preferred embodiment of the present invention, the fixing unit is disposed parallel to the electrically serial direction.

In another preferred embodiment of the present invention, the holding member extends over the entire length of the fuel cells along an axial direction of the fuel cells.

In another preferred embodiment of the present invention, the side surface holding member comprises an exposing portion through which at least a portion of the fuel cells is exposed.

In another preferred embodiment of the present invention, the side surface holding member is disposed only on respective ends of the fuel cells in an axial direction of the fuel cells.

In another preferred embodiment of the present invention, the solid oxide fuel cell device further comprises an insulating portion disposed between the fuel cell stack and the fuel electrode side holding member and/or the air electrode side holding member.

According to the present invention, it is possible to maintain the shape of the stack before and after the power generation in units of fuel cell stacks. Moreover, it is possible to provide a stack structure capable of eliminating a complicated burning process of the fuel cell stack. Furthermore, it is possible to eliminate a variation in a temperature distribution near the fuel cell container of the fuel cell module during the power generation, thereby enhancing the power generating performance of the fuel cell device. Accordingly, it is possible to provide a safe and highly efficient fuel cell device which is practical and is excellent in a mass-producing property.

### BRIEF DESCRIPTION OF THE DRAWINGS

FIG. 1 is a perspective view showing a section of a solid oxide fuel cell of a fuel celll stack according to an embodiment of the present invention;
FIG. 2 is a perspective view showing a structure of a fuel cell stack according to a first embodiment of the present invention;
FIG. 3 is a sectional view taken along a line C - C in FIG. 2;
FIG. 4 is a sectional view of a structure of a holding member surrounding a fuel cell stack according to a second embodiment of the present invention;
FIG. 5 is a sectional view showing a structure of a connecting portion connecting an air electrode and a fuel electrode in a holding member surrounding the fuel cell stack shown in FIGs 2 and 3;
FIG. 6 is a sectional view showing an example of a fuel cell module having the fuel cell stack and the holding member illustrated in FIG. 2;
FIG. 7 is a perspective view of a fuel cell stack according to a third embodiment of the present invention;
FIG. 8 is a sectional view taken along the line D - D in FIG. 7;
FIG. 9 is a perspective view of a fuel cell stack according to a fourth embodiment of the present invention;
FIG. 10 is a sectional view taken along the line E - E in FIG. 9;
FIG. 11 is a sectional view taken along the line F - F in FIG. 9;
FIG. 12 is a sectional view taken along the line G - G in FIG. 9;
FIG. 13 is a sectional view showing a current collecting structure of a fuel cell stack according to a fifth embodiment of the present invention;
FIG. 14 is a perspective view showing a section of a solid oxide fuel cell of a fuel celll stack according to a sixth embodiment of the present invention; and
FIG. 15 is a sectional view of a portion of a fuel cell stack according to the sixth embodiment of the present invention.

### BEST MODE FOR CARRYING THE INVENTION

Hereinafter, embodiments of the present invention will be explained with reference to the drawings.

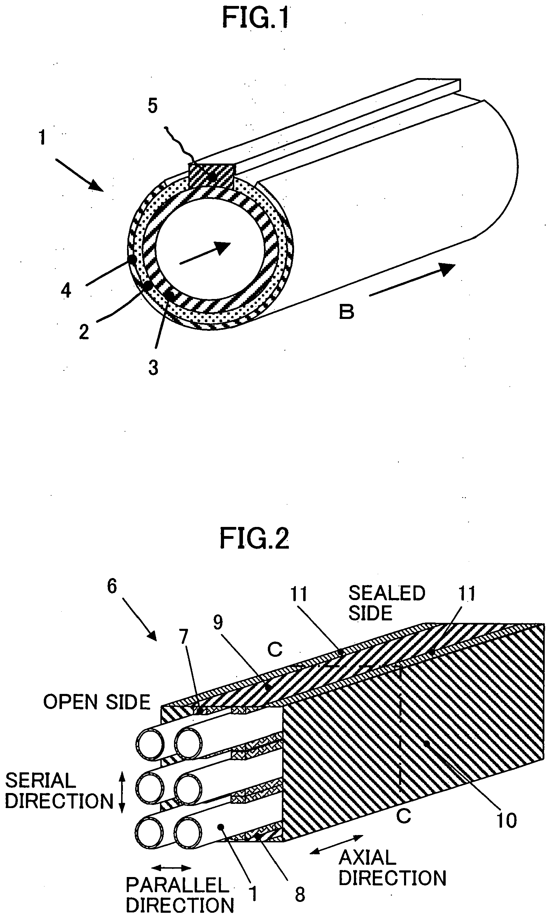

FIG. 1 is a perspective view showing a section of a solid oxide fuel cell of a fuel celll stack according to an embodiment of the present invention. A solid oxide fuel cell 1 (hereinafter, a fuel cell 1) has a cylindrical shape. The fuel cell 1 includes an electrolyte 2, an air electrode 3, a fuel electrode 4, and an interconnector 5 connected to the air electrode 3. According to this fuel cell 1, air containing oxygen is caused to flow in a direction passing through an inner part A of the air electrode 3, and a fuel gas containing hydrogen and/or carbon monoxide is caused to flow in a direction passing through an outer part B of the fuel electrode 4. Although the fuel cell 1 shown in FIG. 1 has a configuration in which the air electrode 3 is disposed on an inner side of the fuel electrode 4, the fuel cell 1 may have a configuration in which the air electrode 3 is disposed on an outer side of the fuel electrode 4.

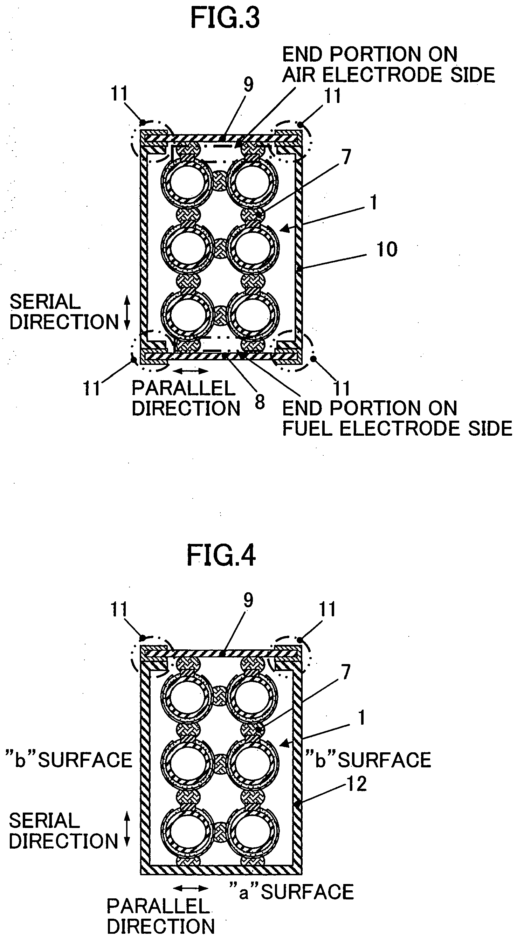

FIG. 2 is a perspective view showing a structure of a fuel cell stack according to a first embodiment of the present invention, and FIG. 3 is a sectional view taken along a line C - C in FIG. 2. A fuel cell stack 6 including a plurality of fuel cells 1 stacked in 2-parallel and 3-series configuration is surrounded by a holding member which includes a fuel electrode side holding member 8 disposed on a fuel electrode side, an air electrode side holding member 9 disposed on an air electrode side, and side surface holding members 10 disposed so as to be parallel to a direction in which the fuel cells 1 are electrically coupled in series. The fuel cells 1 are electrically coupled in series and/or in parallel via conductive members 7. More specifically, the fuel cells 1 are coupled in series by coupling the fuel electrode 4 of one of the fuel cells 1 and the interconnector 5 of the other fuel cell 1, and the fuel cells 1 are coupled in parallel by coupling the fuel electrodes 4 of the respective fuel cells 1. Each of the conductive members 7 is, for example, a laminated metal sheet having a three-dimensional structure with a continuous column serving as a frame.

The fuel electrode side holding member 8 and the air electrode side holding member 9 are coupled to the side surface holding members 10 via connecting portions 11, thereby pressing the fuel cells 1 and the conductive members 7 such that a coupling configuration of the fuel cells 1 and the conductive members 7 are maintained and such that the fuel cells 1 and the conductive members 7 are held over substantially the entire length thereof along an axial direction of the fuel cells 1. The fuel electrode side holding member 8 is electrically coupled to the fuel electrodes 4 of the fuel cells 1, and the air electrode side holding member 9 is electrically coupled to the air electrodes 3 of the other fuel cells 1. Each of the fuel electrode side holding member 8 and the air electrode side holding member 9 is electrically insulated from the side surface holding members 10 by the connecting portion 11. A generated power is output between the fuel electrode side holding member 8 and the air electrode side holding member 9, and can be fetched from the fuel electrode side holding member 8 and/or the air electrode side holding member 9.

According to the configuration described above, the fuel cells 1 and the conductor members 7 of the fuel cell stack 6 are pressed irrespective of before or after the power generation, without carrying out a burning process. Therefore, it is possible to ensure an excellent electrical connection without pressing the fuel cell module in the electrically serial direction during the power generation. Furthermore, the stack structure can be maintained stable during a handling of the fuel cell stack 6 such as an assembly or transportation of the fuel cell module.

Because the fuel electrode side holding member 8 and the air electrode side holding member 9 are electrically insulated from the side surface holding members 10 respectively, even if the adjacent side surface holding members 10 come in contact with each other due to thermal deformation during the power generation, the fuel cells 1 can be prevented from causing a deterioration resulting from a short circuit such as a generation of an excessive thermal stress caused by a local heat generation or a change in a property of a base material of the fuel cell device caused by a reverse reaction to a power generating reaction. Thus, it is possible to maintain the stable electrical connection of the fuel cell stack 6 and to suppress a deterioration of the fuel cell stack 6 such as performance degradation or a breakage of the fuel cell device. Accordingly, it is possible to provide the fuel cell device having a high reliability. Furthermore, there is also an advantage that it is possible to connect the holding members surrounding each of the fuel cell stacks 6 by means of screw fixation, welding or riveting, thereby easily carrying out the current collection of the fuel cell stacks 6. The holding member may be formed of a ceramic or a refractory metal such as heat-resistant stainless steel or Inconel, and the conductive member 7 may be formed from a metallic porous body or a metal plate formed of a metallic material containing nickel as a main component. In a case in which the holding member is formed of a ceramic, it is necessary to provide stack current collectors in order to fetch a power to terminals on respective sides of the fuel cell stack 6. The fuel cell stacks 6 are electrically coupled to each other through such stack current collectors.

FIG. 4 is a sectional view of a structure of a holding member surrounding a fuel cell stack according to a second embodiment of the present invention. As shown in FIG. 4, a holding member, surrounding the fuel cell stack 6, includes a fuel electrode side holding member 12 and an air electrode side holding member 9. The fuel cell stack 6 is pressed by the fuel electrode side holding member 12 and the air electrode side holding member 9, and the fuel electrode side holding member 12 is coupled to the air electrode side holding member 9 via connecting portions 11 while keeping the pressing state. The fuel electrode side holding member 12 is electrically coupled to a fuel electrode side of the fuel cell stack 6, the air electrode side holding member 9 is electrically coupled to an air electrode side of the fuel cell stack 6, and the fuel electrode side holding member 12 is electrically insulated from the air electrode side holding member 9 by the connecting portions 11. Accordingly, because the fuel electrode side holding member and the side surface holding members are formed as the one-piece structure, it is possible to abolish a step of assembling the fuel electrode side holding member and the side surface holding members, thereby allowing an easier assembling work of fuel cell stack 6. Moreover, a variation in shapes of the fuel cell stacks 6 through the assembly of the fuel electrode side holding member and the side surface holding members is relieved, whereby the "a" surfaces of the fuel cell stack 6, which are parallel to the electrically serial direction, and the "b" surfaces of the fuel cell stack 6, which is perpendicular to the electrically serial direction, form right angles to each other. Accordingly, it is possible to assemble the fuel cell stack 6 with high precision based on the holding member.

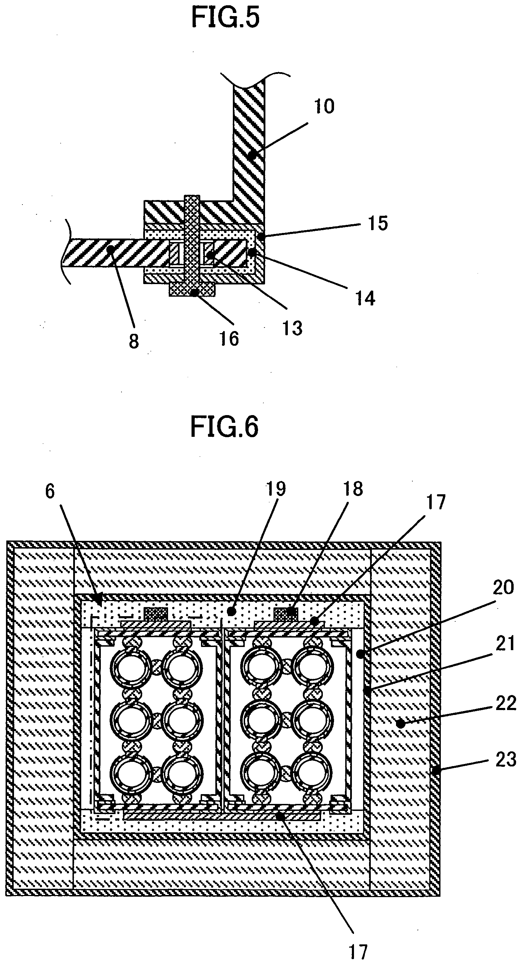

FIG. 5 is a sectional view showing a structure of a connecting portion connecting an air electrode and a fuel electrode in a holding member surrounding the fuel cell stack shown in FIGs 2 and 3. As shown in FIG. 5, the connecting portion 11 has an insulating ring 13 disposed on an inner side of a hole provided in a part of the fuel electrode side holding member 8. A ceramic fiber sheet 14 is formed therearound, and via a holding plate 15 maintaining a shape of the ceramic fiber sheet 14, the fuel electrode side holding member 8 and the side surface holding member 10 are coupled by means of a coupling fitting 16 without an electrical conduction therebetween. As a result, even if the holding member expands or contracts due a change in a temperature during the power generation, a stress applied from the fuel electrode side holding member 8 and the side surface holding member 10 to the connecting portion 11 can be controlled by dispersing the stress at the coupling fitting 16 through the ceramic fiber sheet 14 having a buffering property. Therefore, it is possible to suppress a deterioration of the connecting portion such as a deformation or breakage, thereby maintaining an insulating structure. The insulating ring and the ceramic fiber sheet may be formed of alumina, mullite, magnesia or zirconia.

It is preferable that the coupling fitting 16 be attached so as to press the fuel cell stack 6 in a direction parallel to the electrically serial direction of the fuel cell stack. As a result, when handling the fuel cell stack 6 such as assembling or transporting or during the power generation in which causes a thermal stress distribution is generated due to a change in a temperature, a stress acting on coupling surfaces between the fuel cells 1 and the conductive members 7 in the fuel cell stack 6 is always concentrated only in directions parallel to the electrically serial direction, so that a generation of a stress in an electrically parallel direction can be suppressed. Accordingly, even if an internal stress acts on the fuel cell stack 6 due to an external stress caused by the handling of the fuel cell stack 6 or a thermal stress generated by the temperature distribution, the internal stress of the fuel cell stack 6 is not dispersed to the coupling structure of the fuel cells 1 and the conductive members 7 such that the stress in the electrically parallel direction is increased. Thus, it is possible to stably maintain the electrical coupling of the fuel cells and the conductive members.

It is preferable that the holding member be provided over substantially the entire length of the fuel cells 1 in the axial direction. According to such a configuration, when handling the fuel cell stack 6 such as assembling or transporting or during the power generation in which the thermal stress distribution is caused by the change in a temperature, a compression force applied to the fuel cells 1 through the conductive members 7 can be dispersed in the axial direction of the fuel cells 1, thereby preventing a local stress from being generated so that the breakage of the fuel cells 1 can be suppressed. Thus, it is possible to stably maintain the coupling of the fuel cells 1 and the conductive members 7. Moreover, it is possible to fetch the generated power from any portions in the axial direction of the fuel cells 1. For example, the temperature of the fuel cell device can be controlled such that a current collecting resistance of the stack current collector is increased in a portion in the axial direction of the fuel cell stack 6 where a temperature is high so that a power generating reaction is suppressed, and such that the current collecting resistance in a portion where a temperature is low is reduced so that the power generating reaction is facilitated. Accordingly, a distribution of a current density in the axial direction of the fuel cells 1 is made uniform so that it is possible to form a structure in which a variation in the power generating temperature of the fuel cell device is small and a drift of a fuel gas is suppressed.

FIG. 6 is a sectional view showing an example of a fuel cell module having the fuel cell stack 6 and the holding member illustrated in FIG. 2. As shown in FIG. 6, the fuel cell stacks 6 are electrically coupled to each other via a stack current collector 17 between the fuel electrode side holding members 8 and/or the air electrode side holding members 9, and the stack current collector 17 coupled to the air electrode side and the stack current collector 17 coupled to the fuel electrode side are electrically coupled to respective current collecting rods 18. The fuel cell stacks 6 are held on an inner side of an inner fuel cell container 21, which is for maintaining an airtightness of a fuel gas, such that an insulating-buffering member 19 is disposed between the inner fuel cell container 21 and the fuel electrode side holding member 8 and/or the air electrode side holding member 9. Furthermore, a heat insulating material 22 and an outer fuel cell container 23 are formed on an outer side of the inner fuel cell container 21 in this order. According to such a configuration of the fuel cell module, the fuel cells 1 and the conductive members 7 are held and fixed in units of the fuel cell stacks 6, whereby a stable stack structure is maintained without conducting the fuel cell stacks 6 and the inner fuel cell container 21. In other words, by providing the insulating-buffering material for gas sealing and filling a gap, the structure of the fuel cell module can be maintained stable without a need of pressing the fuel cell stacks 6 by providing a voluminous heat insulating material, which has a hardness required for pressing, around the fuel cell stacks 6. As a result, it is possible to provide a downsized configuration of the fuel cell module by placing the insulating-buffering material as the heat insulating material in a power generating chamber 20 inside the inner fuel cell container 21. Moreover, a temperature gradient of the supplied fuel gas, which may be caused by the heat insulating material, becomes less likely to be generated. Therefore, it is possible to supply, to the fuel cell devie, the fuel gas having a small density difference, thereby suppressing the drift of the fuel gas inside the power generating chamber. Accordingly, a fuel gas contributing to the power generation of the fuel cell device is increased, so that a downsized and high performance fuel cell device can be provided.

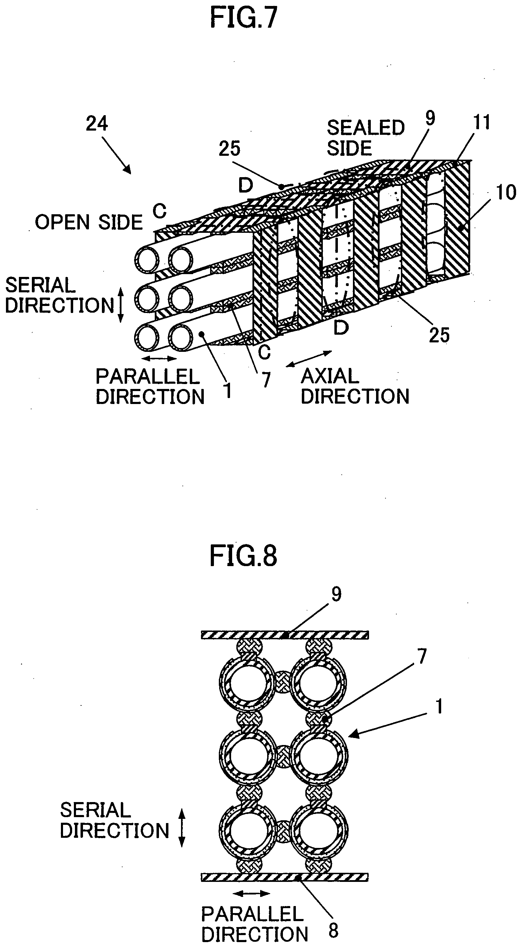

FIG. 7 is a perspective view of a fuel cell stack 24 according to a third embodiment of the present invention, and FIG. 8 is a sectional view taken along the line D - D in FIG. 7. Moreover, the sectional view taken along the line C - C in FIG. 7 is similar to FIG. 3.

As shown in FIGS. 3, 7 and 8, the fuel cell stack 24 includes stacked fuel cells 1, conductive members 7 coupling the respective fuel cells 1, and a holding member surrounding the fuel cells 1 and the conductive members 7. The holding member includes a fuel electrode side holding member 8, an air electrode side holding member 9 and side surface holding members 10. Each of the side surface holding members 10 has exposing portions 25 which are formed at an interval in an axial direction of the fuel cells 1.

According to the configuration described above, the holding member can absorb and radiate heat through each of the exposing portions 25, thereby preventing an accumulation of a great thermal distortion which may be caused by a difference in a linear expansion coefficient between the fuel cells 1 and the holding member in the axial direction of the fuel cells 1 or a difference in the linear expansion coefficient of the holding member due to a temperature distribution. Moreover, there is another advantage that a fuel gas surrounding surfaces of the fuel cells 1 and the holding member is diffused in the exposed portions so that a gas density and a gas temperature can be made uniform. Accordingly, the holding member can maintain its structure depending on a temperature distribution generated in the axial direction of the fuel cells 1 so that a contact of the fuel cells 1 and the conductive members 7 can be maintained stable, whereby the fuel cell device can obtain a power generating performance which is safe and highly efficient. In view of suppressing the distortion of the holding member, it is preferable to form the holding member such that a difference in the linear expansion coefficient caused by a temperature distribution is less than about 2×10-6 (cm/cm ·K-1) in the same material. Further, because the conductive members 7 coupling the fuel cells 1 to each other are exposed similarly in the axial direction of the fuel cells 1, it is possible to absorb and radiate heat generated on respective connecting surfaces of the fuel cells 1 and the conductive members 7 through the surfaces of the fuel cells 1 and the exposed conductive members 7, thereby preventing an accumulation of a great thermal distortion due to a difference in a linear expansion coefficient between the fuel cells 1 and the conductive members 7 in the axial direction of the fuel cells 1 or a difference in a linear expansion coefficient of the conductive members 7 due to a temperature distribution. Moreover, there is another advantage that the fuel gas surrounding the surfaces of the fuel cells 1 and the conductive members 7 is diffused in the exposed portions, so that the gas density and the gas temperature can be made uniform, and furthermore, a flow rate per unit time of the fuel gas is reduced to increase the fuel gas contributing to the power generation of the fuel cells 1, resulting in an improvement in the power generating performance of the fuel cell stack 24. Accordingly, the fuel cell stack 24 can maintain its structure depending on the temperature distribution generated in the axial direction of the fuel cells 1, and can suppress a breakage of the fuel cells 1 due to a thermal stress, thereby keeping the electrical couplings of the fuel cells 1 and the conductive members 7 stable. Thus, it is possible to provide the fuel cell device having the power generating performance which is safe and highly efficient.

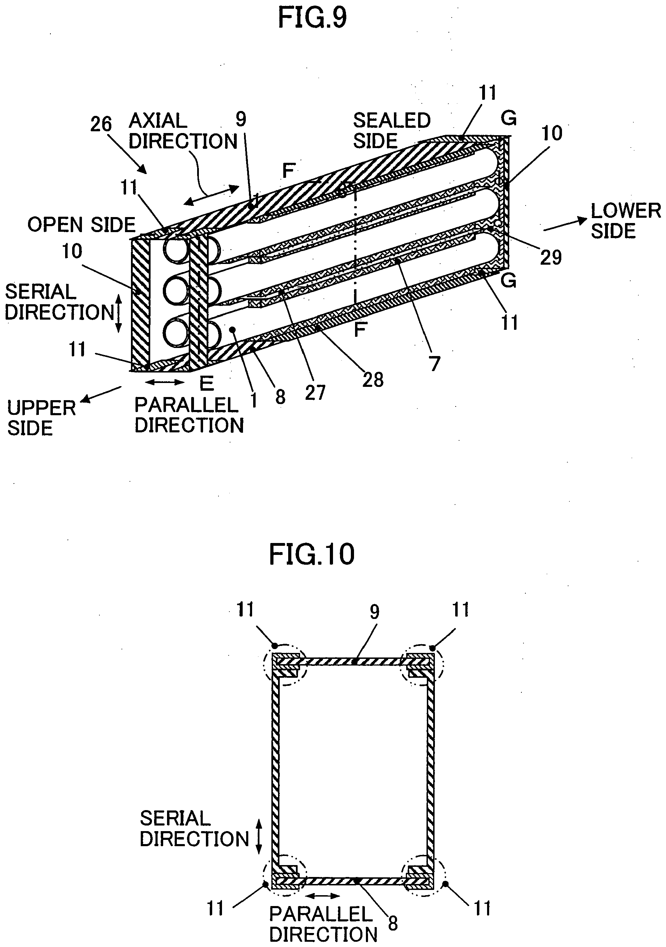

FIG. 9 is a perspective view of a fuel cell stack 26 according to a fourth embodiment of the present invention, and FIGS. 10, 11 and 12 are sectional views taken along the lines E - E, F - F and G - G in FIG. 9, respectively.

As shown in FIGS. 9 to 12, the fuel cells 1 are holded by the holding member including a fuel electrode side holding member 8, an air electrode side holding member 9 and side surface holding members 10. The side surface holding members 10 are provided only on respective end sides in an axial direction of the fuel cells 1, namely, excluding a portion where the electrodes of the fuel cell 1 are disposed to generate power.

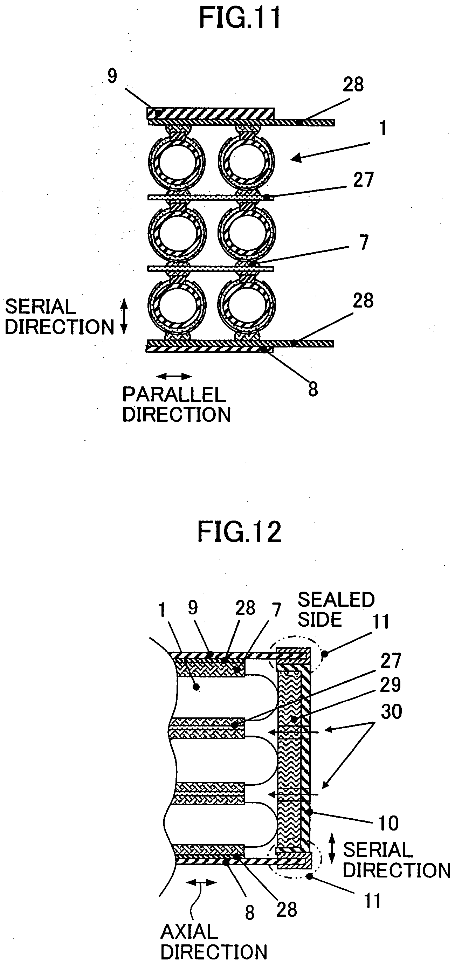

As shown in FIG. 12, on a sealed side, the fuel cells 1 are arranged with reference to a sealing portion buffering member 29 having vent holes 30. The fuel cells 1 are electrically coupled in series via the conductive members 7, and are electrically coupled in parallel via cell current collectors 27. More specifically, a fuel electrode 4 and an interconnector 5 are coupled to each other and/or the fuel electrodes 4 are coupled to each other. The fuel cell stack 26 are pressed by the fuel electrode side holding member 8 and the air electrode side holding member 9 such that a shape of the fuel cell stack 26 is kept. As shown in FIG. 10, the fuel electrode side holding member 8 and the air electrode side holding member 9 are coupled and fixed to each other via the side surface holding members 10 and connecting portions 11 which are disposed only on the end portions in the axial direction of the fuel cells 1.

According to the configuration described above, the side surface holding members 10 are not provided in a power generation reacting portion of the fuel cell device. Therefore, even if the side surface holding members 10 are deformed by the thermal stress so that the adjacent side surface holding members 10 come in contact with each other during the power generation of the fuel cell device, it is possible to prevent a deterioration of the fuel cell 1, such as the generation of an excessive thermal stress due to a local heat generation or a change in a property of a base material of the fuel cell device due to a reverse reaction to a power generating reaction, which may be caused by a short circuit, without a direct contact to the fuel cells 1. Moreover, the fuel cell stacks 26 can be coupled to each other via a stack current collector 28 at a short distance without a detour, whereby a configuration with a small current collecting loss can be provided. Furthermore, because the side surface holding members 10 are provided only on an open side and the sealed side of the fuel cell stack 26, it is possible to freely set a pitch of the fuel cells 1 in the parallel direction, and to form a structure in which heat to be applied from the fuel cells 1 to the surrounding gas through the power generating reaction is maintained to be uniform, a variation in a power generating temperature of the fuel cell device is lessened, and a drift of the fuel gas is easily controlled. Accordingly, it is possible to maintain a stable electrical coupling of the fuel cell stacks 26, and to suppress a deterioration of the fuel cell device, such as a reduction in the performance or a breakage. Thus, it is possible to provide the fuel cell device having a high reliability.

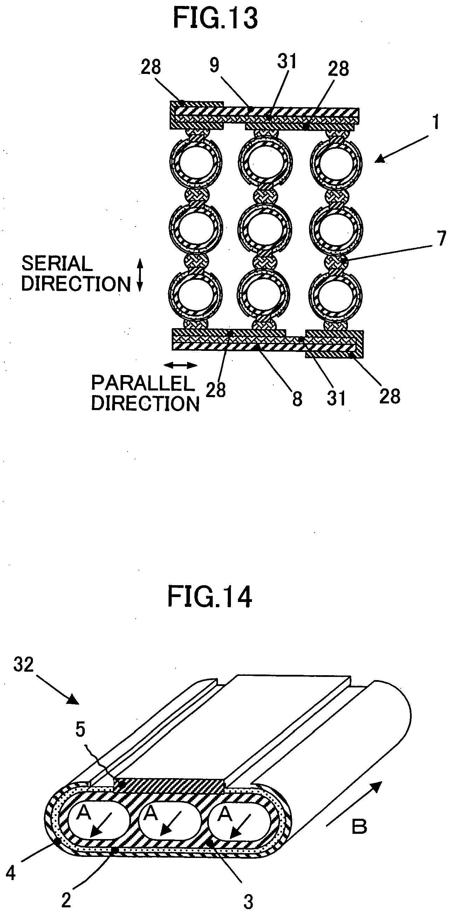

FIG. 13 is a sectional view showing a current collecting structure of a fuel cell stack according to a fifth embodiment of the present invention. As shown in FIG. 13, fuel cells 1 are coupled to stack current collectors 28 in 3-serial units, and the fuel cell stack 26 including the fuel cells 1 thus stacked in 1-parallel and 9-series are surrounded by an insulating member 31, a fuel electrode side holding member 8 and an air electrode side holding member 9. All of the fuel cells 1 are electrically coupled in series via conductive members 7 and the stack current collectors 28. More specifically, a fuel electrode 4 of one of the fuel cells 1 is coupled to an interconnector 5 of the other of fuel cells 1.

According to the configuration described above, an electrode of the fuel cells 1 is reversed at the stack current collectors 28 disposed on respective ends in the electrically serial direction of the fuel cell stack, and the fuel cells 1 in series and/or in parallel, so that an electricity can be fetched from both ends or one of the ends of the fuel cell stack. Accordingly, it is possible to provide a fuel cell stack having versatilities with respect to specifications such as a shape of a power generating device, a current and a voltage. Further, by keeping a coupling distance in the electrically serial and parallel directions of the fuel cells 1 to be uniform, a uniform amount of heat is given from the fuel cells 1 to a fuel gas flowing inside the fuel cell stack, thereby relieving a temperature distribution in an axial direction of the fuel cells 1 or in a planar direction perpendicular thereto to prevent the fuel gas from flowing with a bias into the fuel cell stack. Accordingly, it is possible to provide a fuel cell device having a highly efficient power generating performance.

It is preferable that a linear expansion coefficient of the holding member disposed around the fuel cells 1 be almost equal to a linear expansion coefficient of the fuel cells 1. For example, in a case in which the linear expansion coefficient of the fuel cells 1 is about 10.5×10-6 (cm/cm ·K-1), the linear expansion coefficient of the holding member may be about 7×10-6 (cm/cm·K-1) to 14×10-6 (cm/cm·K-1). As a result, a stress to the fuel cells 1 in a compressing direction and a stress to side surface holding members 10 in a pulling direction can be respectively transmitted by only depending on the thermal expansion of the conductive members 7, almost without being affected by the thermal expansion caused by the temperature distribution of the fuel electrode side holding member 8 and/or the air electrode side holding member 9 which is/are disposed in the fuel stack. Therefore, it is possible to easily provide a stable fuel cell stack structure in which an excellent contact of the fuel cells 1 and the conductive members 7 are maintained and a deformation of the side surface holding members 10 is permitted.

In the fuel cell stack according to the fifth embodiment, it is preferable that the holding member be formed by ferrite based stainless steel containing aluminium and/or molybdenum. As a result, it is possible to form a stable passive film such as chromia or alumina on a surface of the holding member, thereby preventing a deterioration such as an oxidation or a corrosion of the surface of the holding member in a reducing atmosphere containing carbon hydride such as hydrogen or methane, or hydrogen steam. Moreover, it is possible to prevent a defect such as a crack on the surface of the holding member by suppressing an amount of a deformation of heat resisting steel at a high temperature (700 to 1000 °C). Thus, it is possible to keep the fuel cell stack structure stable.

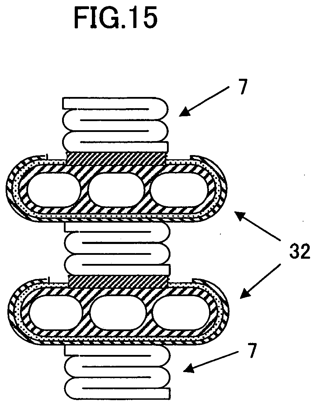

FIG. 14 is a perspective view showing a section of a solid oxide fuel cell 32 according to a sixth embodiment of the present invention. As shown in FIG. 14, the fuel cell 32 includes an electrolyte 2, an air electrode 3, a fuel electrode 4, and an interconnector 5 coupled to the air electrode 3. The air electrode 3 has at least two cylindrical spaces, and air containing oxygen is caused to flow in a direction passing through inner parts A thereof A fuel gas containing hydrogen and/or carbon monoxide is caused to flow in a direction passing through an outer part B of the fuel electrode 4. Also in a case in which the fuel cell 32 having the above described configuration is used, it is possible to configure the fuel cell stacks of the first to fifth embodiments by coupling the fuel cells 32 via conductive members 7 as shown in FIG. 15.

Furthermore, the fuel cell device can also have such a configuration that the fuel gas flows through the inner side of fuel cells 1, 32 while an oxidant gas flows through the outer side of the fuel cells 1, 32 by using a material such as indium oxide for the conductive members 7.

## Claims

1. A solid oxide fuel cell device comprising:
a fuel cell container (21) including a power generation chamber (20) therein, the fuel cell container (21) being for maintaining a gas-tightness of a fuel gas and/or an air;
a plurality of fuel cell stacks (6; 26) being held in the power generation chamber (20) of the fuel cell container (21; and
a stack current collector (17) by which the fuel cell stacks (6; 26) are coupled to each other in the fuel cell container (21);
each of the fuel cell stacks (6; 26) comprising:
a plurality of cylindrical fuel cells (1; 32), and a conductive member (7) for electrically connecting the fuel cells (1; 32), wherein each of the fuel cells (1; 32) comprises a fuel electrode (4) and an air electrode (3); and
a holding member (8, 9, 10) surrounding the fuel cell stack (6; 26);
the holding member (8, 9) includes a fuel electrode side holding member (8; 12) which is electrically coupled to the fuel electrode (4) of at least one of the fuel cells (1; 32), and an air electrode side holding member (9) which is electrically coupled to the air electrode (3) of at least one of the other fuel cells (1; 32), a side surface holding member (10) coupling the fuel electrode side holding member (8; 12) and the air electrode side holding member (9), wherein the holding member further comprises an insulating portion (13, 14) which electrically insulates at least one of the fuel electrode side holding member (8; 12) and the air electrode side holding member (9) from the side surface holding member (10),
wherein the fuel electrode side holding member (8; 12) and the air electrode side holding member (9) in each of the fuel cell stacks (6; 26) are respectively fixed so as to press the fuel cells (1; 32) in an electrically serial direction of the fuel cells (1; 32), and
wherein the fuel cell stacks (6; 26) are electrically connected to each other by the fuel electrode side holding member (8; 12) and/or the air electrode side holding member (9).

2. The solid oxide fuel cell device according to claim 1, wherein the side surface holding member (10) and either one of the fuel electrode side holding member (8; 12) and the air electrode side holding member (9) are formed in a one-piece structure.

3. The solid oxide fuel cell device according to any one of claims 1 - 2, wherein the side surface holding member (8; 12) is disposed parallel to the electrically serial direction.

4. The solid oxide fuel cell device according to any one of claims 1 - 3, wherein the holding member (8, 9, 10; 12, 9) extends over the entire length of the fuel cells (1; 32) along an axial direction of the fuel cells (1; 32).

5. The solid oxide fuel cell device according to any one of claims 1-4, wherein the side surface holding member (10) comprises an exposing portion (25; 30) through which at least a portion of the fuel cells (1; 32) is exposed.

6. The solid oxide fuel cell device according to any one of claims 1 - 5, wherein the side surface holding member (10) is disposed only on respective ends of the fuel cells (1; 32) in an axial direction of the fuel cells (1; 32).

7. The solid oxide fuel cell device according to any one of claims 1 - 6, further comprising:
a current collector (28) electrically coupled to the fuel cells (1; 32); and
an insulating member (31) disposed between the current collector (28) and one of the fuel electrode side holding member (8; 12) and the air electrode side holding member (9).

8. The solid oxide fuel cell device according to any one of claims 1 - 7, wherein either one of the fuel electrode (4) and the air electrode (3) has a plurality of cylindrical spaces therein.

## Patentansprüche

1. Festoxidbrennstoffzellvorrichtung umfassend:
einen Brennstoffzellbehälter (21) mit einer Energieerzeugungskammer (20) darin, wobei der Brennstoffzellbehälter (21) zur Aufrechterhaltung einer Gasdichtigkeit eines Brennstoffgases und/oder von Luft geeignet ist;
eine Mehrzahl von Brennstoffzellstapeln (6; 26), welche in der Energieerzeugungskammer (20) des Brennstoffzellbehälters (21) gehalten wird; und
einen Stapelstromkollektor (17), durch welchen die Brennstoffzellstapel (6; 26) miteinander in dem Brennstoffzellbehälter (21) gekoppelt sind;
wobei jeder der Brennstoffzellstapel (6; 26) umfasst:
eine Mehrzahl von zylindrischen Brennstoffzellen (1; 32), und ein leitendes Bauteil (7) zur elektrischen Verbindung der Brennstoffzellen (1; 32), wobei jede der Brennstoffzellen (1; 32) eine Brennstoffelektrode (4) und eine Luftelektrode (3) umfasst; und
ein Haltebauteil (8, 9, 10), welches den Brennstoffzellstapel (6; 26) umgibt;
wobei das Haltebauteil (8, 9) ein brennstoffelektrodenseitiges Haltebauteil (8; 12) umfasst, welches elektrisch an die Brennstoffelektrode (4) zumindest einer Brennstoffzelle (1; 32) gekoppelt ist, und ein luftelektrodenseitiges Haltebauteil (9), welches elektrisch an die Luftelektrode (3) zumindest einer anderen Brennstoffzelle (1; 32) gekoppelt ist, ein Seitenoberflächenhaltebauteil (10), welches das brennstoffelektrodenseitige Haltebauteil (8; 12) und das luftelektrodenseitige Haltebauteil (9) koppelt, wobei das Haltebauteil weiterhin einen Isolierabschnitt (13, 14) umfasst, welcher zumindest entweder das brennstoffelektrodenseitige Haltebauteil (8; 12) oder das luftelektrodenseitige Halterbauteil (9) vom Seitenoberflächenhaltebauteil (10) isoliert,
wobei das brennstoffelektrodenseitige Haltebauteil (8; 12) und das luftelektrodenseitige Haltebauteil (9) in jedem der Brennstoffzellstapel (6; 26) jeweils so befestigt ist, dass die Brennstoffzellen (1; 32) in elektrisch serieller Richtung der Brennstoffzellen (1; 32) gepresst werden, und
wobei die Brennstoffzellstapel (6; 26) durch das brennstoffelektrodenseitige Haltebauteil (8; 12) und/oder das luftelektrodenseitige Haltebauteil (9) elektrisch miteinander verbunden sind.

2. Festoxidbrenntstoffzellvorrichftung gemäß Anspruch 1, wobei das Seitenoberflächenhaltebauteil (10) und sowohl das brennstoffelektrodenseitige Haltebauteil (8; 12) als auch das luftelektrodenseitige Haltebauteil (9) in einer einstückigen Struktur gebildet sind.

3. Festoxidbrennstoffzellvorrichtung gemäß einem der Ansprüche 1 - 2, wobei das Seitenoberflächenhaltebauteil (8; 12) parallel zu der elektrisch seriellen Richtung ausgerichtet ist.

4. Festoxidbrennstoffzellvorrichtung nach einem der Ansprüche 1 - 3, wobei sich das Haltebauteil (8, 9, 10; 12, 9) über die gesamte Länge der Brennstoffzellen (1; 32) entlang einer axialen Richtung der Brennstoffzellen (1; 32) erstreckt.

5. Festoxidbrennstoffzellvorrichtung gemäß einem der Ansprüche 1 - 4, wobei das Seitenoberflächenhaltebauteil (10) einen freiliegenden Abschnitt (25; 30) aufweist, in welchem zumindest ein Abschnitt der Brennstoffzellen (1; 32) freiliegt.

6. Festoxidbrennstoffzellvorrichtung gemäß einem der Ansprüche 1 - 5, wobei das Seitenoberflächenhaltebauteil (10) nur an jeweiligen Enden der Brennstoffzellen (1; 32) in einer axialen Richtung der Brennstoffzellen (1; 32) angeordnet ist.

7. Festoxidbrennstoffzellvorrichtung gemäß einem der Ansprüche 1 - 6, weiterhin umfassend:
einen Stromabnehmer (28), welcher elektrisch an die Brennstoffzellen (1; 32) gekoppelt ist; und
einen Isolator (31), welcher zwischen dem Stromabnehmer (28) und entweder dem brennstoffelektrodenseitigen Haltebauteil (8; 12) oder dem luftelektrodenseitigen Haltebauteil (9) angeordnet ist.

8. Festoxidbrennstoffzellvorrichtung gemäß einem der Ansprüche 1 - 7, wobei sowohl die Brennstoffelektrode (4) als auch die Luftelektrode (3) eine Vielzahl von zylindrischen Räumen darin aufweist.

## Revendications

1. Dispositif de pile à combustible à oxyde solide, comprenant:
un conteneur de piles à combustible (21) comprenant une chambre de génération de puissance (20) dans celui-ci, le conteneur de piles à combustible (21) servant à maintenir une étanchéité au gaz d'un gaz combustible et/ou d'un air;
une pluralité d'empilements de piles à combustible (6; 26) maintenus dans la chambre de génération de puissance (20) du conteneur de piles à combustible (21); et
un collecteur de courant d'empilement (17) à l'aide duquel les empilements de piles à combustible (6; 26) sont couplés les uns aux autres dans le conteneur de piles à combustible (21);
chacun des empilements de piles à combustible (6; 26) comprenant:
une pluralité de piles à combustible cylindriques (1; 32), et un élément conducteur (7) pour connecter électriquement les piles à combustible (1; 32), dans lequel chacune des piles à combustible (1; 32) comprend une électrode à combustible (4) et une électrode à air (3); et
un élément de support (8, 9, 10) qui entoure l'empilement de piles à combustible (6; 26);
l'élément de support (8, 9) comprenant un élément de support latéral d'électrode à combustible (8; 12) qui est couplé électriquement à l'électrode à combustible (4) d'au moins une des piles à combustible (1; 32); et un élément de support latéral d'électrode à air (9) qui est couplé électriquement à l'électrode à air (3) d'au moins une des piles à combustible (1; 32), un élément de support de surface latérale (10) qui relie l'élément de support latéral d'électrode à combustible (8; 12) à l'élément de support latéral d'électrode à air (9), dans lequel l'élément de support comprend en outre une partie d'isolation (13, 14) qui isole électriquement au moins un parmi l'élément de support latéral d'électrode à combustible (8; 12) et l'élément de support latéral d'électrode à air (9) de l'élément de support de surface latérale (10),
dans lequel l'élément de support latéral d'électrode à combustible (8; 12) et l'élément de support latéral d'électrode à air (9) dans chacun des empilements de piles à combustible (6; 26) sont respectivement fixés de manière à presser les piles à combustible (1; 32) dans une direction de série électrique des piles à combustible (1; 32), et
dans lequel les empilements de piles à combustible (6; 26) sont connectés électriquement les uns aux autres par l'élément de support latéral d'électrode à combustible (8; 12) et/ou l'élément de support latéral d'électrode à air (9).

2. Dispositif de pile à combustible à oxyde solide selon la revendication 1, dans lequel l'élément de support de surface latérale (10) et l'un ou l'autre parmi l'élément de support latéral d'électrode à combustible (8; 12) et l'élément de support latéral d'électrode à air (9) sont formés en une structure d'une seule pièce.

3. Dispositif de pile à combustible à oxyde solide selon l'une quelconque des revendications 1 à 2, dans lequel l'élément de support de surface latérale (8; 12) est disposé parallèlement à la direction de série électrique.

4. Dispositif de pile à combustible à oxyde solide selon l'une quelconque des revendications 1 à 3, dans lequel l'élément de support (8, 9, 10; 12, 9) s'étend sur la totalité de la longueur des piles à combustible (1; 32) le long d'une direction axiale des piles à combustible (1; 32).

5. Dispositif de pile à combustible à oxyde solide selon l'une quelconque des revendications 1 à 4, dans lequel l'élément de support de surface latérale (10) comprend une partie d'exposition (25; 30) à travers laquelle au moins une partie des piles à combustible (1; 32) est exposée.

6. Dispositif de pile à combustible à oxyde solide selon l'une quelconque des revendications 1 à 5, dans lequel l'élément de support de surface latérale (10) est disposé uniquement sur des extrémités respectives des piles à combustible (1; 32) dans une direction axiale des piles à combustible (1; 32).

7. Dispositif de pile à combustible à oxyde solide selon l'une quelconque des revendications 1 à 6, comprenant en outre:
un collecteur de courant (28) couplé électriquement aux piles à combustible (1; 32); et
un élément d'isolation (31) disposé entre le collecteur de courant (28) et un parmi l'élément de support latéral d'électrode à combustible (8; 12) et l'élément de support latéral d'électrode à air (9).

8. Dispositif de pile à combustible à oxyde solide selon l'une quelconque des revendications 1 à 7, dans lequel une parmi l'électrode à combustible (4) et l'électrode à air (3) comprend une pluralité d'espaces cylindriques dans celle-ci.
